# EUROPÄISCHE PATENTSCHRIFT

(11) **EP 3 310 629 B1**
(45) Veröffentlichungstag und Bekanntmachung des Hinweises auf die Patenterteilung: **07.08.2019**
(21) Anmeldenummer: 16730683.6
(22) Anmeldetag: 02.06.2016
(51) Int. Cl.: B60T 8/1766, B60T 8/26

(54) **VERFAHREN ZUR ELEKTRONISCHEN REGELUNG DER BREMSKRAFTVERTEILUNG IN EINER DRUCKMITTELBETÄTIGTEN BREMSANLAGE EINES FAHRZEUGS SOWIE DRUCKMITTELBETÄTIGTEN BREMSANLAGE EINES FAHRZEUGS MIT EINER SOLCHEN REGELUNG**
METHOD FOR ELECTRONICALLY REGULATING THE BRAKING FORCE DISTRIBUTION IN A PRESSURE MEDIUM-ACTIVATED BRAKE SYSTEM OF A VEHICLE AND PRESSURE MEDIUM-ACTIVATED BRAKE SYSTEM OF A VEHICLE HAVING SUCH A REGULATING MEANS
PROCÉDÉ DE RÉGULATION ÉLECTRONIQUE DE LA RÉPARTITION DE FORCE DE FREINAGE DANS UN SYSTÈME DE FREINAGE ACTIONNÉ PAR FLUIDE SOUS PRESSION D'UN VÉHICULE ET SYSTÈME DE FREINAGE ACTIONNÉ PAR FLUIDE SOUS PRESSION D'UN VÉHICULE PRÉSENTANT UNE TELLE RÉGULATION

(30) Priorität: 16.06.2015 DE 102015109630
(43) Veröffentlichungstag der Anmeldung: 25.04.2018
(73) Patentinhaber: KNORR-BREMSE Systeme für Nutzfahrzeuge GmbH, 80809 München (DE)
(72) Erfinder: WIEDER, Gerhard, 74354 Besigheim (DE); MUSTAPHA, Adnan, 75433 Maulbronn (DE); SCHÄFERS, Andreas, 71282 Hemmingen (DE); HECKER, Falk, 71706 Markgröningen (DE); WEBER, Christian, 71701 Schwieberdingen (DE)
(86) Internationale Anmeldenummer: PCT/EP2016/000912
(87) Internationale Veröffentlichungsnummer: WO 2016/202434

(56) Entgegenhaltungen:
- DE-A1- 4 309 243
- DE-A1- 19 620 583
- DE-A1-102011 118 130
- DE-C1- 4 401 995

## Beschreibung

### Stand der Technik

Die Erfindung geht aus von einem Verfahren zur elektronischen Regelung der Bremskraftverteilung in einer druckmittelbetätigten Bremsanlage eines Fahrzeugs mit wenigstens einem einer Vorderachse zugeordneten Vorderachsbremskreis und wenigstens einem wenigstens einer Hinterachse zugeordneten Hinterachsbremskreis, wobei bei einer Betätigung der Bremsanlage ein in dem wenigstens einen Hinterachsbremskreis wirkender Hinterachsbremsdruck mit der Zielsetzung geregelt wird, ein Blockieren der Hinterräder vor einem Blockieren der Vorderräder zu verhindern, gemäß dem Oberbegriff von Anspruch 1.

Weiterhin geht die Erfindung aus von einer druckmittelbetätigten Bremsanlage eines Fahrzeugs mit wenigstens einem einer Vorderachse zugeordnetem Vorderachsbremskreis und wenigstens einem wenigstens einer Hinterachse zugeordnetem Hinterachsbremskreis sowie mit einer elektronischen Regelung der Bremskraftverteilung, bei welcher bei einer Betätigung der Bremsanlage ein in dem wenigstens einen Hinterachsbremskreis wirkender Hinterachsbremsdruck mit der Zielsetzung geregelt wird, ein Blockieren der Hinterräder vor einem Blockieren der Vorderräder zu verhindern, in einem Bremskreis wenigstens ein Druckschalter vorgesehen ist, welcher ein Aktivierungssignal zur Aktivierung der elektronischen Regelung der Bremskraftverteilung abhängig von einem in dem Bremskreis wirkenden Druckwert in Bezug zu einem vorgegebenen Druck-Schwellwert erzeugt, wobei die elektronische Regelung derart ausgebildet ist, dass eine Begrenzung des Bremsdrucks an der Hinterachse nur dann erfolgt, solange das Aktivierungssignal erzeugt wird oder vorhanden ist, aber keine Begrenzung des Bremsdrucks an der Hinterachse erfolgt, wenn kein Aktivierungssignal erzeugt wird oder vorhanden ist, gemäß dem Oberbegriff von Anspruch 5.

In schweren Nutzfahrzeugen ist in der Regel über der Vorderachse ein Dieselmotor eingebaut, der über eine Kardanwelle die Hinterachse antreibt. Durch diese Anordnung ist die Last der Hinterachse stark von der Beladung des Nutzfahrzeugs abhängig. Deshalb wird die vom Fahrer über das Bremspedal eingesteuerte Bremskraft an der Hinterachse bei herkömmlichen Bremsanlagen über ein pneumatisches Ventil mit einem Achslastsensor begrenzt (ALB, automatisch-lastabhängige Bremse). Dadurch wird erreicht, dass beim unbeladenen Fahrzeug nicht der volle, vom Fahrer gewünschte, Bremsdruck an der Hinterachse ansteht und somit die Blockierneigung der Hinterachse verringert wird. Außerdem wird ein höherer Bremskomfort ermöglicht sowie die Standzeit der Hinterachsbremse verlängert.

Zusätzlich zur automatisch-lastabhängige Bremse (ALB) haben heutige Nutzfahrzeuge ein Antiblockiersystem (ABS). Dieses verfügt an jedem Rad über einen Drehzahlsensor (Induktivsensor) und ein Drucksteuerventil, das den vom Fahrer über das Bremspedal eingestellten Druck modulieren kann. Das ABS tritt bei Blockierneigung eines Rades in Aktion.

Aus dem Stand der Technik, beispielsweise aus der DE 10 2006 045 317 A1, ist eine sog. EBV-Funktion (Elektronische Bremskraft-Verteilung) bekannt, die mit Hilfe von ABS-Drucksteuerventilen die automatisch lastabhängige Bremse (ALB-Funktion) realisiert und somit das Lastventil einspart. Da das ABS im Gegensatz zur automatischlastabhängigen Bremse (ALB) über keinen Lastsensor verfügt, wird der Beladungszustand mit Hilfe der Geschwindigkeitsdifferenz zwischen Vorder- und Hinterachse (vVA-vHA) beim Bremsen ermittelt. Je geringer die Hinterachslast ist, umso mehr Schlupf entsteht an der Hinterachse bei gleicher Bremsbetätigung, d. h. umso größer wird die Geschwindigkeitsdifferenz vVA-vHA. An der Vorderachse wirkt sich der Unterschied zwischen beladenem und unbeladenem Fahrzeug wegen der Motoranordnung wesentlich weniger aus. Somit kann die Geschwindigkeitsdifferenz vVA-vHA beim Bremsen als Maß für die Beladung herangezogen werden. Mit anderen Worten sperrt EBV bei einem Bremsvorgang die Hinterachsbremsen, unter Umständen auch ein einzelnes Hinterrad, abhängig vom Differenzschlupf zwischen Vorder- und Hinterachse durch Aktivierung der ABS-Ventile vom weiteren Druckaufbau ab. Falls jedoch die Vorderachsbremsen defekt sind, also die Vorderachse schwächer als normal oder gar nicht bremst, kann die Geschwindigkeitsdifferenz vVA-vHA sehr groß werden. Dann würde die EBV-Funktion die ABS-Ventile an der Hinterachse auf Druckhalten stellen und den Bremsdruck an der Hinterachse begrenzen. In diesem Fall wäre das Nutzfahrzeug jedoch unterbremst. Weiterhin ergibt sich bei einem nur sehr wenig oder unbeladenem Fahrzeug das Problem, dass die Bremsdruckregelung wenig feinfühlig ist, da in diesem Fall der Differenzschlupf zwischen Vorder- und Hinterachse relativ groß wird und ein vorgegebener Differenzschlupfschwellwert schnell überschritten wird.

In DE 10 2011 118 130 B4 wird deshalb ein Verfahren zur elektronischen Regelung der Bremskraftverteilung in Abhängigkeit von einem Differenzschlupf oder Differenzgeschwindigkeit zwischen wenigstens einem Rad der Vorderachse und wenigstens einem Rad der Hinterachse eines Fahrzeugs vorgestellt, bei welcher bei einem Überschreiten eines Differenzschlupf-Schwellwerts oder eines Differenzgeschwindigkeits-Schwellwerts durch den Differenzschlupf oder die Differenzgeschwindigkeit der Bremsdruck an der Hinterachse begrenzt wird. Dabei wird der Differenzschlupf-Schwellwert oder der Differenzgeschwindigkeits-Schwellwert in Abhängigkeit von der Bremsanforderung bestimmt. Mit anderen Worten wird bei einer relativ geringen Fahrer-Bremsanforderung ein relativ kleiner Differenzschlupf-Schwellwert eingestellt und bei einer relativ großen Bremsanforderung ein relativ großer Differenzschlupf-schwellwert. Die Regelungslogik ist daher so ausgelegt, dass beim normalen Bremsen mit geringer oder mittlerer Bremsanforderung und bei gering oder unbeladenem Fahrzeug ein Eingriff stattfindet, bevor an der Hinterachse die ABS-Regelung anläuft. Starke Bremsungen werden durch die erfasste Fahrer-Bremsanforderung erkannt. Durch eine entsprechende Anpassung der Differenzschlupfschwelle abhängig von der erfassten Fahrer- Bremsanforderung wird ein feinfühliger Übergang zur ABS-Regelung gewährleistet. Die Bremsanforderung durch den Fahrer wird durch einen Drucksensor in einem pneumatischen Hinterachsbremskreis bzw. Hinterachskanal erfasst und/oder durch ein elektrisches Signal eines elektrischen Bremswertgebers in einem digitalen Fußbremsmodul. Nachteilig hierbei ist jedoch, dass ein solcher elektrischer Drucksensor ein relativ teures Bauteil darstellt.

Eine Regelung der Bremskraftverteilung (EBV) in der geschilderten Weise, bei der die Differenz zwischen dem Bremsschlupf an der Vorderachse und dem Bremsschlupf an der Hinterachse als Regelgröße dient, hat daher den Nachteil, dass bei einem Bremskreisausfall an der Vorderachse die Druckbegrenzung an den Hinterrädern durch die EBV-Regelung zu früh einsetzt. Dieser Nachteil macht sich insbesondere bei einer Vorderachs-/Hinterachs-Bremskreisaufteilung bemerkbar, weil in diesem Fall beide Vorderradbremsen an demselben Druckmittelkreis angeschlossen sind und folglich ein Ausfall beider Vorderradbremsen mit zu geringem Druck an beiden Hinterrädern einhergeht. Damit die laut ECE-Richtlinie verlangte Fahrzeugverzögerung von 30% bei einem Bremskreisausfall auch mit dem Hinterachsbremskreis allein erfüllt werden kann, muss in einem solchen Falle eines erkannten defekten Vorderachsbremskreises eine Bremskraftverteilung mit Bremsdruckreduktion im Hinterachsbremskreis unterbunden werden.

Gemäß der gattungsbildenden DE 43 09 243 A1 werden mit Hilfe eines in dem oder den Vorderradbremskreis(en) installierten Druckschalters oder Drucksensors die oben geschilderten Nachteile vermieden, wenn sichergestellt ist, dass die EBV-Regelung nur stattfindet, wenn der Druckschalter bzw. Drucksensor das Vorhandensein von Bremsdruck in den Vorderradbremsen signalisiert. Ist das Signal nicht vorhanden, wird eine EBV-Regelung unterbunden und dadurch sichergestellt, dass jegliche Begrenzung des Hinterrad-Bremsdruckes durch die EBV-Regelung unterbleibt. Eine EBV-Regelung ist somit nur bei geöffnetem Druckschalter möglich, weil nur dann sichergestellt ist, dass in der Vorderachse ein Druckaufbau erfolgt. Diese Sicherheitsmaßnahme berücksichtigt jedoch nicht den Fall, dass zwar ein Vorderachsbremsdruck in dem Vorderachsbremskreis gebildet wird, jedoch aufgrund eines mechanischen Versagens der Vorderachsbremse z.B. aufgrund ungünstiger Reibungsverhältnisse der Reibpartner der Reibungsbremse oder wegen eines Versagens des Bremsmechanismus die Vorderachsbremse keine oder eine nur ungenügende Vorderachsbremskraft liefert. In einem solchen Fall würde eine elektronische Bremsdruckverteilung z.B. nach dem Differenzschlupf einen relativ hohen Differenzschlupf zwischen den Rädern der Vorderachse und den Rädern der Hinterachse feststellen, obwohl keine Bremsblockierneigung der Räder an der Hinterachse vorliegt, und dann aufgrund einer Überschreitung des Differenzschlupf-Schwellwerts den Bremsdruck im Hinterachsbremskreis begrenzen. Dies würde zu einem unerwünschten Bremskraftverlust und damit zu einem relativ langen Bremsweg führen.

Der Erfindung liegt demgegenüber die Aufgabe zugrunde, ein Verfahren und eine Vorrichtung der eingangs erwähnten Art derart weiter zu entwickeln, dass bei niedrigen Herstellkosten bei einem Versagen des Vorderachsbremskreises dennoch eine möglichst hohe Bremsleistung erzielt wird.

Diese Aufgabe wird erfindungsgemäß durch das Verfahren von Anspruch 1 und die Vorrichtung von Anspruch 5 gelöst.

### Offenbarung der Erfindung

Das Verfahren gemäß der Erfindung sieht vor, dass eine Begrenzung des Bremsdrucks an der Hinterachse nur dann erfolgt, solange ein in dem Hinterachsbremskreis wirkender Druckwert unterhalb eines vorgegebenen Druck-Schwellwerts liegt, aber keine Begrenzung des Bremsdrucks an der Hinterachse erfolgt, wenn der in dem Hinterachsbremskreis wirkende Druckwert gleich oder größer in Bezug zu dem vorgegebenen Druck-Schwellwert ist.

Bei der Vorrichtung ist erfindungsgemäß vorgesehen, dass der Bremskreis, in dem der Druckschalter vorgesehen ist, der Hinterachsbremskreis ist, und dass der Druckschalter ausgebildet ist, dass er das Aktivierungssignal liefert, wenn ein in dem Hinterachsbremskreis wirkender Druckwert seinen Schaltdruck unterschreitet, d.h. unterhalb des vorgegebenen Druck-Schwellwerts liegt und welcher ansonsten kein solches Aktivierungssignal liefert.

Eine Begrenzung des Drucks bzw. Bremsdrucks an der Hinterachse bedeutet, dass dieser gegenüber einem entsprechend der Fahrer-Bremsanforderung vorgegebenen höheren Wert begrenzt wird. Unter Druckwert ist dabei ein Druckwert jedweden Drucks zu verstehen, der in einem Hinterachsbremskreis geführt wird. Dies kann der in den Radbremszylindern einer Hinterachse wirkende Bremsdruck sein, oder ein Druck, wie er eingangs eines im Hinterachsbremskreis angeordneten ABS-Drucksteuerventils geführt wird, welches diesen Druck dann im Rahmen eines ABS-Regeleingriffs aber noch senken kann, so dass ein demgegenüber niedrigerer Bremsdruck erzeugt wird.

Mit anderen Worten wird bis zum Erreichen des Druck-Schwellwerts durch den Druckwert oder Bremsdruckwert in dem Hinterachsbremskreis oder in den Hinterachsbremskreisen die elektronische Regelung der Bremsdruck- oder Bremskraftverteilung durchgeführt und bei einem Druckwert oder Bremsdruckwert, der gleich oder größer in Bezug auf den Druck-Schwellwert ist, die elektronische Regelung der Bremsdruck- oder Bremskraftverteilung abgeschaltet. Der Druck-Schwellwert stellt dabei den Schaltdruck des Druckschalters dar.

Wenn dann der Vorderachsbremskreis z.B. aus den oben angeführten Gründen ausfällt, aber dennoch ein Vorderachsbremsdruck gebildet wird, so stellt die elektronische Bremsdruckverteilung z.B. nach dem Differenzschlupfprinzip einen relativ hohen Differenzschlupf zwischen den Rädern der Vorderachse und den Rädern der Hinterachse fest, obwohl keine Bremsblockierneigung der Räder an der Hinterachse vorliegt und deshalb auch keine Änderung der Bremsdruckverteilung notwendig wäre. Die nachlassende Bremswirkung stellt der Fahrer fest und erhöht dann instinktiv die Bremsanforderung, wodurch der im Druckschalter anstehende Bremsdruck oder Steuerdruck im Hinterachsbremskreis oder in den Hinterachsbremskreisen ansteigt und bei einem Überschreiten des Druck-Schwellwerts der Druckschalter kein Aktivierungssignal für eine Aktivierung oder ein aktiviert halten der elektronischen Bremsdruckverteilung mehr liefert. Infolgedessen kann keine Begrenzung des Hinterachsbremsdrucks mehr stattfinden, weshalb die Bremsen an der oder an den Hinterachsen mit dem in Bezug zur Bremsanforderung vollen Bremsdruck betrieben werden, um eine möglichst hohe Bremsleistung liefern zu können.

Andererseits ist ein solcher Druckschalter kostengünstiger als ein Drucksensor wie er z.B. in der oben beschriebenen DE 10 2011 118 130 B4, so dass die erfindungsgemäß Vorrichtung kostengünstig herstellbar ist. Die Komforteinbuße ist demgegenüber gering.

Schließlich wird bis zum Erreichen des Druck-Schwellwerts das Aktivierungssignal für die elektronische Regelung der Bremsdruck- oder Bremskraftverteilung erzeugt, so dass diese bis dahin aktiv ist, was sich positiv auf die Fahrstabilität auswirkt, weil ein Bremsblockieren der Hinterachse verhindert wird, noch bevor beispielsweise die ABS-Regelung aktiv wird. Wenn dann der Druck-Schwellwert erreicht bzw. überschritten wurde, wird zwar die elektronische Regelung der Bremsdruck-oder Bremskraftverteilung abgeschaltet. Jedoch sorgt dann die Bremsschlupfregelung (ABS) dafür, dass ein übermäßiges Bremsblockieren an der Hinterachse vermieden wird, so dass auch dann Fahrstabilität gewährleistet wird.

Durch die in den Unteransprüchen aufgeführten Maßnahmen sind vorteilhafte Weiterbildungen und Verbesserungen der in den Ansprüchen 1 und 5 angegebenen Erfindung möglich.

Bevorzugt beträgt der Druck-Schwellwert bzw. der Schaltdruck des Druckschalters etwa 3 bar. Da der Bremsdruck bei den meisten Bremsungen in pneumatischen oder elektro-pneumatischen Bremsanlagen von Nutzfahrzeugen in einem Bereich zwischen 0 bar und etwa 2,5 bar liegt, finden dann die Mehrzahl der Bremsungen mit der komfortablen elektronischen Regelung der Bremskraft- oder Bremsdruckverteilung statt. In eher seltenen Fällen erreicht oder überschreitet der Bremsdruck den Druck-Schwellwert von etwa 3 bar.

Besonders bevorzugt weist die Bremsanlage wenigstens einen Bremslichtschalter auf und eine Betätigung der Bremsanlage wird mittels eines vom Bremslichtschalter ausgesteuerten Bremslichtschaltersignals erkannt, wobei die Begrenzung des Bremsdrucks an der Hinterachse nur dann erfolgt, wenn ein eine Betätigung der Bremse repräsentierendes Bremslichtschaltersignal vorliegt, aber keine Begrenzung des Bremsdrucks an der Hinterachse erfolgt, wenn kein eine Betätigung der Bremse repräsentierendes Bremslichtschaltersignal vorliegt.

Kumulativ in Bezug zu den Merkmalen der Ansprüche 1 und 5 muss daher für eine Aktivierung der elektronischen Bremsdruck- oder Bremskraftverteilung oder Begrenzung des Hinterachsbremsdrucks zum einen das Aktivierungssignal vom Druckschalter erzeugt werden und zum andern auch das eine Betätigung der Bremse repräsentierende Bremslichtschaltersignal vom Bremslichtschalter vorliegen. Damit wird durch ein kumulatives Vorliegen zweier Signale sichergestellt, dass die elektronische Regelung der Bremsdruck- oder Bremskraftverteilung oder Begrenzung des Hinterachsbremsdrucks nur im Falle des Erfordernisses aktiviert wird.

Gemäß einer Weiterbildung wird die elektronische Regelung der Bremskraftverteilung in Abhängigkeit von einem Differenzschlupf oder Differenzgeschwindigkeit zwischen wenigstens einem Rad der Vorderachse und wenigstens einem Rad der Hinterachse geregelt, wobei bei einer Betätigung der Bremse und bei einem Überschreiten eines Differenzschlupf-Schwellwerts oder eines Differenzgeschwindigkeits-Schwellwerts durch den Differenzschlupf oder die Differenzgeschwindigkeit der Bremsdruck an der Hinterachse begrenzt wird.

Die druckmittelbetätigte Bremsanlage bzw. deren elektronische Regelung der Bremskraftverteilung in Abhängigkeit von einem Differenzschlupf oder Differenzgeschwindigkeit zwischen wenigstens einem Rad der Vorderachse und wenigstens einem Rad der Hinterachse eines Fahrzeugs beinhaltet dann vorzugsweise:
- Einen Sensor zur Messung der Raddrehzahlen des Rads der Vorderachse,
- einen Sensor zur Messung der Raddrehzahlen des Rads der Hinterachse,
- ein elektronisches Steuergerät zur Berechnung des Differenzschlupfs oder einer Differenzdrehzahl zwischen dem wenigstens einen Rad der Vorderachse und dem wenigstens einen Rad der Hinterachse, wobei
- das elektronische Steuergerät derart ausgebildet ist, dass bei einem Überschreiten eines Differenzschlupf-Schwellwerts oder eines Differenzgeschwindigkeits-Schwellwerts durch den Differenzschlupf oder durch die Differenzgeschwindigkeit der Bremsdruck an der Hinterachse begrenzt wird.

Gemäß einer Weiterbildung kann das elektronische Steuergerät bzw. die elektronische Regelung der Bremskraftverteilung weiterhin derart ausgebildet sein, dass es eine bei Vorliegen von übermäßigem Bremsschlupf eine Bremsschlupfregelung (ABS) ausführt, wobei die Begrenzung des Bremsdrucks an der Hinterachse mittels wenigstens eines im Hinterachsbremskreis angeordneten ABS-Drucksteuerventils erfolgt.

Dann wird mit Hilfe der ABS-Drucksteuerventile die elektronische Regelung der Bremskraftverteilung im oben beschriebenen Sinne realisiert, ohne dass hierfür weitere Bauelemente wie etwa ein Lastventil notwendig wären.

Da die elektronische Regelung der Bremskraftverteilung in einer Software umgesetzt wird und lediglich eine bereits im Rahmen der ABS-Funktion ohnehin vorhandene Hardware wie Radrehzahlsensoren und Drucksteuerventile nutzt, wobei lediglich noch ein Druckschalter notwendig ist, kann diese Funktion kostengünstig realisiert werden. Insbesondere ist es auf einfache Weise möglich, eine bestehende Bremseinrichtung mit EBD-Funktion nachzurüsten.

Genaueres geht aus der folgenden Beschreibung eines Ausführungsbeispiels hervor.

### Zeichnung

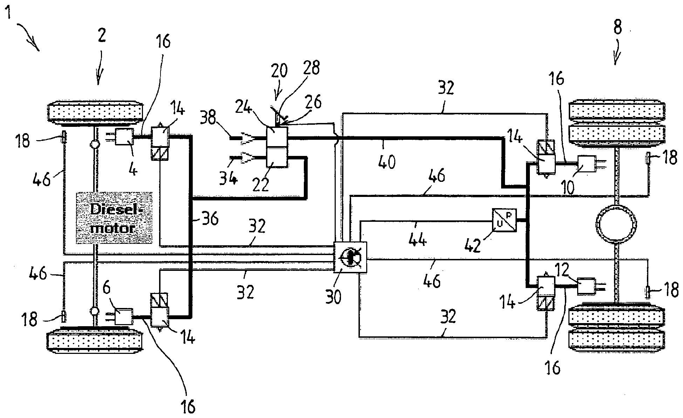

Nachstehend ist ein Ausführungsbeispiel der Erfindung in der Zeichnung dargestellt und in der nachfolgenden Beschreibung näher erläutert. In der Zeichnung zeigt die einzige Figur einen schematischen Schaltplan einer pneumatischen Bremseinrichtung eines Nutzfahrzeugs als bevorzugte Ausführungsform einer druckmittelbetätigten Bremsanlage gemäß der Erfindung.

### Beschreibung des Ausführungsbeispiels

Eine in der Figur mit 1 bezeichnete beispielsweise pneumatische Bremseinrichtung eines Fahrzeugs, insbesondere eines Nutzfahrzeugs, weist an einer Fahrzeugvorderachse 2 zwei pneumatische Bremszylinder 4, 6 sowie an der Fahrzeughinterachse 8 zwei pneumatische Bremszylinder 10, 12 auf. Das Nutzfahrzeug hat beispielsweise eine Dieselmaschine als Frontmotor, welcher über eine hier nicht gezeigte Kardanwelle die Räder der Hinterachse 8 treibt. Den Bremszylindern 4, 6, 10, 12 ist jeweils eine der Bremsdruckmodulation dienende Drucksteuerventilanordnung 14 zugeordnet, hier insbesondere als ABS-Drucksteuerventil zum Drucksenken, Druckhalten und Drucksteigern im Rahmen einer Bremsschlupfregelung (ABS) ausgebildet. Diese sind jeweils durch eine Bremsleitung 16 mit dem jeweiligen Bremszylinder 4, 6, 10, 12 verbunden. Alternativ könnte die Bremseinrichtung 1 auch eine elektropneumatische Bremseinrichtung oder ein elektronisches Bremssystem (EBS) mit Druckregelmoduln als Drucksteueranordnung sein. Die pneumatischen Bremszylinder 4, 6, 10, 12 wirken hier beispielsweise auf Scheibenbremsen.

An die Räder beider Fahrzeugachsen 2, 8 ist ferner jeweils ein Raddrehzahlsensor 18 zur Überwachung des Raddrehverhaltens angeschlossen. Die Bremseinrichtung 1 ist daher für eine Brems- und/oder Antriebsschlupfregelung (ABS und/oder ASR) ausgebildet. Die Bremseinrichtung 1 ist weiterhin mit einem Bremswertgeber 20 ausgestattet, welcher hier zwei pneumatische Kanäle 22 und 24 aufweist sowie beispielsweise einen Bremslichtschalter 26 zur Erzeugung eines von einer Betätigung eines Fußbremspedals 28 abhängigen elektrischen Signals. Bei einer Betätigung des Fußbremspedals 28 erzeugt der Bremslichtschalter 26 daher ein Signal, welches hier nicht dargestellte Bremslichter des Fahrzeugs aufleuchten lässt.

Ein elektronisches Steuergerät 30 der Bremseinrichtung 1 steht über ein Leitungsnetz 32 mit den Drucksteuerventilanordnungen 14 der beiden Achsen 2, 8 in Verbindung. Die beiden pneumatischen Kanäle 22 und 24 des Bremswertgebers 20 sind von der Bauart handelsüblicher, zweikreisiger Betriebsbremsventile. Der pneumatische Vorderachskanal 22 des Bremswertgebers 20 ist energiezuflussseitig mit einer mit einem hier nicht gezeigten Druckluftvorrat verbundenen Versorgungsleitung 34 und energieabflussseitig durch eine Steuerleitung 36 mit den Drucksteuerventilen 14 der Vorderachse 2 verbunden. Der pneumatische Hinterachskanal 24 steht mittels einer Versorgungsleitung 38 mit einem ebenfalls nicht gezeigten Druckluftvorrat und mittels einer Steuerleitung 40 mit den Drucksteuerventilen 14 der Hinterachse 8 in Verbindung. Mit den pneumatischen Kanälen 22 und 24 des Bremswertgebers 20 sind daher ein Vorderachskanal und ein Hinterachskanal der pneumatischen Bremseinrichtung 1 des Fahrzeugs steuerbar. In die Steuerleitung 40 des Hinterachskanals kann zudem ein Druckschalter 42 eingebaut sein, welcher über eine elektrische Signalleitung 44 ein elektrisches Signal an das elektronische Steuergerät 30 meldet, welches abhängig von einem Erreichen/Überschreiten oder Unterschreiten des Schaltdrucks des Druckschalters 42 gebildet wird.

Der an die Versorgungsleitung 38 angeschlossene Druckvorratsbehälter, der Hinterachskanal 24 des Fußbremspedals 28, die Steuerleitung 40, die beiden Drucksteuerventile 14, die Bremszylinder 10, 12 sowie die von diesen betätigten Radbremsen bilden dann einen Hinterachsbremskreis der Bremseinrichtung 1. In analoger Weise bilden der an die Versorgungsleitung 34 angeschlossene Druckvorratsbehälter, der Vorderachskanal 22 des Fußbremspedals 28, die Steuerleitung 36, die beiden Drucksteuerventile 14, die Bremszylinder 4, 6 sowie die von diesen betätigten Radbremsen dann einen Vorderachsbremskreis der Bremseinrichtung 1.

Das Steuergerät 30 ist vorzugsweise ausgebildet, dass die Bremskraftverteilung zwischen den Bremsen 4, 6 der Vorderachse 2 und den Bremsen 10, 12 der Hinterachse 8 bevorzugt in Abhängigkeit von einer Differenzgeschwindigkeit vVA-vHA zwischen den Radgeschwindigkeiten vVA der Räder der Vorderachse 2 und den Radgeschwindigkeiten vHA der Räder der Hinterachse 8 erfolgt. Hierzu empfängt das Steuergerät 30 Signale der Raddrehzahlen der Räder der Vorderachse 2 sowie Signale der Raddrehzahlen der Räder der Hinterachse 8 jeweils von den zugeordneten Raddrehzahlsenoren 18, welche über ein weiteres Leitungsnetz 46 mit dem Steuergerät 30 verbunden sind.

In dem elektronischen Steuergerät 30 wird dann aus den Signalen der Raddrehzahlsensoren 18 die Differenzgeschwindigkeit vVA-vHA zwischen den Radgeschwindigkeiten vVA der Räder der Vorderachse 2 und den Radgeschwindigkeiten vHA der Räder der Hinterachse 8 berechnet. Das elektronische Steuergerät 30 umfasst implementierte Steuerroutinen im Rahmen einer elektronischen Regelung der Bremsdruck- bzw. Bremskraftverteilung zwischen Vorderachse 2 und Hinterachse 8, welche bei einem Überschreiten eines Differenzgeschwindigkeits-Schwellwerts durch die Differenzgeschwindigkeit vVA-vHA den Bremsdruck in den Bremszylindern 10, 12 der Hinterachse 8 begrenzen. Hierbei ist der Differenzgeschwindigkeits-Schwellwert beispielsweise im Rahmen einer EOL-Programmierung im elektronischen Steuergerät 30 abgelegt bzw. kann auch wahlweise einstellbar sein.

Das elektronische Steuergerät 30 bzw. die dort implementierte elektronische Regelung der Bremskraftverteilung ist bevorzugt derart ausgebildet, dass es bei Vorliegen von übermäßigem Bremsschlupf eine Bremsschlupfregelung (ABS) ausführt, wobei die Begrenzung des Bremsdrucks an der Hinterachse 8 bevorzugt mittels der im Hinterachsbremskreis angeordneten ABS-Drucksteuerventile 14 erfolgt. Diese Drucksteuerventile 14, welche den vom Hinterachskanal 24 in die Steuerleitung 40 eingesteuerten Bremsdruck entweder in einer Sperrstellung halten oder in einer Entlüftungsstellung senken können, werden dann solange in ihre Entlüftungsstellung geschaltet, bis der von der Regelung gewünschte Druckwert erreicht ist. Eine elektronische Regelung der Bremsdruck- bzw. Bremskraftverteilung zwischen Vorderachse 2 und Hinterachse 8 bzw. eine Begrenzung des Bremsdrucks an der Hinterachse 8 erfolgt nur dann, solange der im Hinterachsbremskreis bzw. im Druckschalter 42 wirkende Druckwert unterhalb des Schaltdrucks des Druckschalters 42 liegt, aber keine Begrenzung des Bremsdrucks an der Hinterachse 8 erfolgt, wenn dieser Druckwert gleich oder größer in Bezug zu dem vorgegebenen Schaltdruck ist. Insbesondere ist der Druckschalter 42 ausgebildet ist, dass er ein Aktivierungssignal für die im Steuergerät 30 implementierte elektronische Regelung der Bremskraft- oder Bremsdruckverteilung liefert, wenn der im Hinterachsbremskreis wirkende Druckwert unterhalb des Schaltdrucks des Druckschalters 42 liegt und welcher ansonsten kein solches Aktivierungssignal liefert. Der Schaltdruck des Druckschalters 42 ist insbesondere frei einstellbar.

Mit anderen Worten wird bis zum Erreichen des Schaltdrucks des Druckschalters 42 durch den Druckwert oder Bremsdruckwert im Hinterachsbremskreis die elektronische Regelung der Bremsdruck- oder Bremskraftverteilung durchgeführt und bei einem Druckwert oder Bremsdruckwert, der gleich oder größer in Bezug auf den Schaltdruck ist, die elektronische Regelung der Bremsdruck- oder Bremskraftverteilung abgeschaltet.

Bevorzugt beträgt der Druck-Schwellwert bzw. der Schaltdruck des Druckschalters 42 etwa 3 bar. Da der Bremsdruck bei den meisten Bremsungen in pneumatischen oder elektro-pneumatischen Bremsanlagen von Nutzfahrzeugen in einem Bereich zwischen 0 bar und etwa 2,5 bar liegt, finden dann die Mehrzahl der Bremsungen mit der komfortablen elektronischen Regelung der Bremskraft- oder Bremsdruckverteilung statt. In eher seltenen Fällen erreicht oder überschreitet der Bremsdruck den Druck-Schwellwert von etwa 3 bar.

Wenn dann der Vorderachsbremskreis ausfällt, aber dennoch ein Vorderachsbremsdruck gebildet wird, z.B. weil die Bremszylinder 4, 6 oder die Radbremsen an der Vorderachse 2 ein mechanisches Problem aufweisen, so stellt die hier nach dem Differenzschlupfprinzip arbeitende elektronische Bremsdruckverteilung einen relativ hohen Differenzschlupf zwischen den Rädern der Vorderachse 2 und den Rädern der Hinterachse 8 fest, obwohl beispielsweise keine Blockierneigung der Räder an der Hinterachse 8 vorliegt und deshalb auch keine Änderung der Bremsdruckverteilung notwendig wäre. Die aufgrund des Versagens des Vorderachsbremskreises nachlassende Bremswirkung stellt der Fahrer fest und erhöht dann instinktiv die Bremsanforderung, wodurch der im Druckschalter 42 anstehende Bremsdruck im Hinterachsbremskreis ansteigt und bei einem Überschreiten des Schaltdrucks des Druckschalters 42 kein Aktivierungssignal für eine Aktivierung oder ein aktiviert halten der elektronischen Bremsdruckverteilung mehr liefert. Infolgedessen kann keine Begrenzung des Bremsdrucks an der Hinterachse 8 mehr stattfinden, weshalb die Bremszylinder 10, 12 an der Hinterachse 8 mit dem In Bezug zur Bremsanforderung vollen Bremsdruck betrieben werden, um eine möglichst hohe Bremsleistung liefern zu können.

Bis zum Erreichen des Schaltdrucks des Druckschalters 42 wird aber das Aktivierungssignal für die elektronische Regelung der Bremsdruck- oder Bremskraftverteilung erzeugt, so dass diese bis dahin aktiv ist, was sich positiv auf die Fahrstabilität auswirkt, weil ein Bremsblockieren der Hinterachse verhindert wird, noch bevor beispielsweise die ABS-Regelung aktiv wird. Wenn dann der Schaltdruck des Druckschalters 42 erreicht bzw. überschritten wurde, wird zwar die elektronische Regelung der Bremsdruck-oder Bremskraftverteilung abgeschaltet. Jedoch sorgt dann die Bremsschlupfregelung (ABS) dafür, dass ein übermäßiges Bremsblockieren an der Hinterachse 8 vermieden wird, so dass auch dann noch Fahrstabilität gewährleistet wird.

Eine Betätigung der Bremseinrichtung 1 bzw. von deren Fußbremspedal 28 wird mittels des vom Bremslichtschalter 26 ausgesteuerten Bremslichtschaltersignals erkannt, wobei vorzugsweise die Begrenzung des Bremsdrucks an der Hinterachse 8 nur dann erfolgt, wenn ein eine Betätigung des Fußbremspedals 28 repräsentierendes Bremslichtschaltersignal vorliegt, aber keine Begrenzung des Bremsdrucks an der Hinterachse 8 erfolgt, wenn kein eine Betätigung des Fußbremspedals 28 repräsentierendes Bremslichtschaltersignal vorliegt.

Daher müssen bevorzugt für eine Aktivierung der elektronischen Bremsdruck- oder Bremskraftverteilung oder für eine Begrenzung des Hinterachsbremsdrucks zum einen das Aktivierungssignal vom Druckschalter 42 erzeugt werden und zum andern auch das eine Betätigung der Bremse repräsentierende Bremslichtschaltersignal vom Bremslichtschalter 26 kumulativ vorliegen.

### Bezugszeichenliste

- 1: Bremseinrichtung
- 2: Vorderachse
- 4: Bremszylinder
- 6: Bremszylinder
- 8: Hinterachse
- 10: Bremszylinder
- 12: Bremszylinder
- 14: Drucksteuerventil
- 16: Bremsleitung
- 18: Raddrehzahlsensor
- 20: Bremswertgeber
- 22: Vorderachskanal
- 24: Hinterachskanal
- 26: Bremslichtschalter
- 28: Fußbremspedal
- 30: Steuergerät
- 32: Leitungsnetz
- 34: Versorgungsleitung
- 36: Steuerleitung
- 38: Versorgungsleitung
- 40: Steuerleitung
- 42: Druckschalter
- 44: Signalleitung
- 46: Leitungsnetz

## Patentansprüche

1. Verfahren zur elektronischen Regelung der Bremskraftverteilung in einer druckmittelbetätigten Bremsanlage (1) eines Fahrzeugs mit wenigstens einem einer Vorderachse (2) zugeordneten Vorderachsbremskreis und wenigstens einem wenigstens einer Hinterachse (8) zugeordneten Hinterachsbremskreis, wobei
a) bei einer Betätigung der Bremsanlage (1) ein in dem wenigstens einen Hinterachsbremskreis wirkender Hinterachsbremsdruck mit der Zielsetzung geregelt wird, ein Blockieren der Hinterräder vor einem Blockieren der Vorderräder zu verhindern, **dadurch gekennzeichnet, dass**
b) eine Begrenzung des Bremsdrucks an der Hinterachse (8) nur dann erfolgt, solange ein in dem Hinterachsbremskreis wirkender Druckwert unterhalb eines vorgegebenen Druck-Schwellwerts liegt, aber keine Begrenzung des Bremsdrucks an der Hinterachse (8) erfolgt, wenn der in dem Hinterachsbremskreis wirkende Druckwert gleich oder größer in Bezug zu dem vorgegebenen Druck-Schwellwert ist.

2. Verfahren nach Anspruch 1, **dadurch gekennzeichnet, dass** die Bremsanlage (1) wenigstens einen Bremslichtschalter (26) aufweist und eine Betätigung der Bremsanlage (1) mittels eines Bremslichtschaltersignals erkannt wird, wobei die Begrenzung des Bremsdrucks an der Hinterachse (8) nur dann erfolgt, wenn ein eine Betätigung der Bremsanlage (1) repräsentierendes Bremslichtschaltersignal vorliegt, aber keine Begrenzung des Bremsdrucks an der Hinterachse (8) erfolgt, wenn kein eine Betätigung der Bremsanlage (1) repräsentierendes Bremslichtschaltersignal vorliegt.

3. Verfahren nach Anspruch 1 oder 2, **dadurch gekennzeichnet, dass** die elektronische Regelung der Bremskraftverteilung in Abhängigkeit von einem Differenzschlupf oder Differenzgeschwindigkeit zwischen wenigstens einem Rad der Vorderachse (2) und wenigstens einem Rad der Hinterachse (8) geregelt wird, wobei bei einer Betätigung der Bremsanlage (1) und bei einem Überschreiten eines Differenzschlupf-Schwellwerts oder eines Differenzgeschwindigkeits-Schwellwerts durch den Differenzschlupf oder die Differenzgeschwindigkeit der Bremsdruck an der Hinterachse (8) begrenzt wird.

4. Computerprogrammprodukt mit Programmteilen zur Ausführung des Verfahrens nach einem der vorhergehenden Ansprüche.

5. Druckmittelbetätigte Bremsanlage (1) eines Fahrzeugs mit wenigstens einem einer Vorderachse (2) zugeordneten Vorderachsbremskreis und wenigstens einem wenigstens einer Hinterachse (8) zugeordneten Hinterachsbremskreis sowie mit
a) einer elektronischen Regelung der Bremskraftverteilung, bei welcher bei einer Betätigung der Bremsanlage (1) ein in dem wenigstens einen Hinterachsbremskreis wirkender Hinterachsbremsdruck mit der Zielsetzung geregelt wird, ein Blockieren der Hinterräder vor einem Blockieren der Vorderräder zu verhindern, wobei
b) in einem Bremskreis wenigstens ein Druckschalter (42) vorgesehen ist, welcher ein Aktivierungssignal zur Aktivierung der elektronischen Regelung der Bremskraftverteilung abhängig von einem in dem Bremskreis wirkenden Druckwert in Bezug zu einem vorgegebenen Druck-Schwellwert erzeugt, wobei
c) die elektronische Regelung derart ausgebildet ist, dass eine Begrenzung des Bremsdrucks an der Hinterachse (8) nur dann erfolgt, solange das Aktivierungssignal erzeugt wird oder vorhanden ist, aber keine Begrenzung des Bremsdrucks an der Hinterachse (8) erfolgt, wenn kein Aktivierungssignal erzeugt wird oder vorhanden ist, **dadurch gekennzeichnet, dass**
d) der Bremskreis, in dem der Druckschalter (42) vorgesehen ist, der Hinterachsbremskreis ist, und dass
e) der Druckschalter (42) ausgebildet ist, dass er das Aktivierungssignal liefert, wenn ein in dem Hinterachsbremskreis wirkender Druckwert seinen Schaltdruck unterschreitet und welcher ansonsten kein solches Aktivierungssignal liefert.

6. Druckmittelbetätigte Bremsanlage nach Anspruch 5, **dadurch gekennzeichnet, dass** sie wenigstens einen Bremslichtschalter (26) aufweist und die elektronischen Regelung der Bremskraftverteilung derart ausgebildet ist, dass sie eine Betätigung der Bremsanlage (1) mittels eines Bremslichtschaltersignals erkennt, wobei die Begrenzung des Bremsdrucks an der Hinterachse (8) nur dann erfolgt, wenn ein eine Betätigung der Bremsanlage (1) repräsentierendes Bremslichtschaltersignal vorliegt, aber keine Begrenzung des Bremsdrucks an der Hinterachse (8) erfolgt, wenn kein eine Betätigung der Bremsanlage (1) repräsentierendes Bremslichtschaltersignal vorliegt.

7. Druckmittelbetätigte Bremsanlage nach Anspruch 5 oder 6, **dadurch gekennzeichnet, dass** die elektronische Regelung der Bremskraftverteilung derart ausgebildet ist, dass die Bremskraftverteilung in Abhängigkeit von einem Differenzschlupf oder Differenzgeschwindigkeit zwischen wenigstens einem Rad der Vorderachse (2) und wenigstens einem Rad der Hinterachse (8) geregelt wird, wobei bei einer Betätigung der Bremsanlage (1) und bei einem Überschreiten eines Differenzschlupf-Schwellwerts oder eines Differenzgeschwindigkeits-Schwellwerts durch den Differenzschlupf oder die Differenzgeschwindigkeit der Bremsdruck an der Hinterachse (8) begrenzt wird.

8. Druckmittelbetätigte Bremsanlage nach Anspruch 7, **dadurch gekennzeichnet, dass** sie wenigstens Folgendes aufweist:
a) einen Sensor (18) zur Messung der Raddrehzahlen des Rads der Vorderachse (2),
b) einen Sensor (18) zur Messung der Raddrehzahlen des Rads der Hinterachse (8),
c) ein elektronischen Steuergerät (30) zur Berechnung eines Differenzschlupfs oder einer Differenzdrehzahl zwischen dem wenigstens einen Rad der Vorderachse (2) und dem wenigstens einen Rad der Hinterachse (8), wobei
d) das elektronische Steuergerät (30) derart ausgebildet ist, dass bei einem Überschreiten eines Differenzschlupf-Schwellwerts oder eines Differenzgeschwindigkeits-Schwellwerts durch den Differenzschlupf oder durch die Differenzgeschwindigkeit der Bremsdruck an der Hinterachse (8) begrenzt wird.

9. Druckmittelbetätigte Bremsanlage nach einem der Ansprüche 5 bis 8, **dadurch gekennzeichnet, dass** das elektronische Steuergerät (30) weiterhin derart ausgebildet ist, dass es eine bei Vorliegen von übermäßigem Bremsschlupf eine Bremsschlupfregelung (ABS) ausführt, wobei die Begrenzung des Bremsdrucks an der Hinterachse (8) mittels wenigstens eines im Hinterachsbremskreis angeordneten ABS-Drucksteuerventils (14) erfolgt.

10. Druckmittelbetätigte Bremsanlage nach einem der Ansprüche 5 bis 8, **dadurch gekennzeichnet, dass** der Druck-Schwellwert des Druckschalters etwa 3 bar beträgt.

## Claims

1. Method for electronically regulating the brake force distribution in a pressure medium-operated brake system (1) of a vehicle having at least one front axle brake circuit, which is associated with a front axle (2), and at least one rear axle brake circuit, which is associated with at least one rear axle (8), wherein
a) when the brake system (1) is operated, a rear axle brake pressure, which acts in the at least one rear axle brake circuit, is regulated with the objective of preventing locking of the rear wheels before locking of the front wheels, **characterized in that**
b) the brake pressure at the rear axle (8) is limited only while a pressure value which acts in the rear axle brake circuit is below a prespecified pressure threshold value, but the brake pressure at the rear axle (8) is not limited if the pressure value which acts in the rear axle brake circuit is equal to or greater than the prespecified pressure threshold value.

2. Method according to Claim 1, **characterized in that** the brake system (1) has at least one brake light switch (26) and operation of the brake system (1) is identified by means of a brake light switch signal, wherein the brake pressure at the rear axle (8) is limited only when a brake light switch signal which represents operation of the brake system (1) is present, but the brake pressure at the rear axle (8) is not limited if a brake light switch signal which represents operation of the brake system (1) is not present.

3. Method according to Claim 1 or 2, **characterized in that** the electronic regulating means for the brake force distribution is regulated depending on a differential slip or differential speed between at least one wheel of the front axle (2) and at least one wheel of the rear axle (8), wherein, when the brake system (1) is operated and when a differential slip threshold value or a differential speed threshold value is exceeded by the differential slip or the differential speed, the brake pressure at the rear axle (8) is limited.

4. Computer program product having program sections for executing the method according to one of the preceding claims.

5. Pressure medium-operated brake system (1) of a vehicle having at least one front axle brake circuit, which is associated with a front axle (2), and at least one rear axle brake circuit, which is associated with at least one rear axle (8), and comprising
a) an electronic regulating means for the brake force distribution, in the case of which, when the brake system (1) is operated, a rear axle brake pressure, which acts in the at least one rear axle brake circuit, is regulated with the objective of preventing locking of the rear wheels before locking of the front wheels, wherein
b) at least one pressure switch (42) is provided in a brake circuit, which pressure switch generates an I activation signal for activating the electronic regulating means for the brake force distribution depending on a pressure value, which acts in the brake circuit, in relation to a prespecified pressure threshold value, wherein
c) the electronic regulating means is designed in such a way that the brake pressure at the rear axle (8) is limited only while the activation signal is generated or is present, but the brake pressure at the rear axle (8) is not limited if an activation signal is not generated or is not present, **characterized in that**
d) the brake circuit in which the pressure switch (42) is provided is the rear axle brake circuit, and **in that**
e) the pressure switch (42) is designed such that it delivers the activation signal when a pressure value, which acts in the rear axle brake circuit, falls below its switching pressure and said pressure switch otherwise does not deliver an activation signal of this kind.

6. Pressure medium-operated brake system according to Claim 5, **characterized in that** it has at least one brake light switch (26), and the electronic regulating means for the brake force distribution is designed in such a way that it identifies operation of the brake system (1) by means of a brake light switch signal, wherein the brake pressure at the rear axle (8) is limited only when a brake light switch signal which represents operation of the brake system (1) is present, but the brake pressure at the rear axle (8) is not limited when a brake light switch signal which represents operation of the brake system (1) is not present.

7. Pressure medium-operated brake system according to Claim 5 or 6, **characterized in that** the electronic regulating means for the brake force distribution is designed in such a way that the brake force distribution is regulated depending on a differential slip or differential speed between at least one wheel of the front axle (2) and at least one wheel of the rear axle (8), wherein, when the brake system (1) is operated and a differential slip threshold value or a differential speed threshold value is exceeded by the differential slip or the differential speed, the brake pressure at the rear axle (8) is limited.

8. Pressure medium-operated brake system according to Claim 7, **characterized in that** it has at least the following:
a) a sensor (18) for measuring the wheel rotation speeds of the wheel of the front axle (2),
b) a sensor (18) for measuring the wheel rotation speeds of the wheel of the rear axle (8),
c) an electronic control device (30) for calculating a differential slip or a differential rotation speed between the at least one wheel of the front axle (2) and the at least one wheel of the rear axle (8), wherein
d) the electronic control device (30) is designed in such a way that, when a differential slip threshold value or a differential speed threshold value is exceeded by the differential slip or by the differential speed, the brake pressure at the rear axle (8) is limited.

9. Pressure medium-operated brake system according to one of Claims 5 to 8, **characterized in that** the electronic control device (30) is further designed in such a way that, when excessive brake slip is present, it executes a brake slip regulation operation (ABS), wherein the brake pressure at the rear axle (8) is limited by means of at least one ABS pressure control valve (14) which is arranged in the rear axle brake circuit.

10. Pressure medium-operated brake system according to one of Claims 5 to 8, **characterized in that** the pressure threshold value of the pressure switch is approximately 3 bar.

## Revendications

1. Procédé de régulation électronique de la répartition de force de freinage dans un système (1) de freinage actionné par fluide sous pression d'un véhicule, comprenant au moins un circuit de frein d'essieu avant associé à un essieu (2) avant et au moins un circuit de frein d'essieu arrière associé à un essieu (8) arrière, dans lequel
a) lors d'un actionnement du système (1) de freinage, on régule une pression de freinage sur l'essieu arrière agissant dans le au moins un circuit de frein d'essieu arrière, en vue d'empêcher un blocage des roues arrière avant un blocage des roues avant, **caractérisé en ce que**
b) il ne s'effectue une limitation de la pression de freinage sur l'essieu (8) arrière que lorsqu'une valeur de pression, s'appliquant dans le circuit de frein de l'essieu arrière, est inférieure à une valeur de seuil de pression donnée à l'avance, mais il n'y a pas de limitation de la pression de freinage sur l'essieu (8) arrière si la valeur de pression, s'appliquant au circuit de freinage d'essieu arrière, est supérieure ou égale à la valeur de seuil de pression donnée à l'avance.

2. Procédé suivant la revendication 1, **caractérisé en ce que** le système (1) de freinage a au moins un interrupteur (26) lumineux de freinage et détecte un actionnement du système (1) de freinage au moyen d'un système d'interrupteur lumineux de freinage, la limitation de la pression de freinage sur l'essieu (8) arrière n'ayant lieu que s'il y a un signal d'interrupteur lumineux de freinage représentant un actionnement de l'installation (1) de freinage, mais une limitation de la pression de freinage à l'essieu (8) arrière n'ayant pas lieu, s'il n'y a pas de signal d'interrupteur lumineux de freinage représentant un actionnement du système (1) de freinage.

3. Procédé suivant la revendication 1 ou 2, **caractérisé en ce que** l'on régule la régulation électronique de la répartition de force de freinage en fonction d'une différence de patinage ou d'une différence de vitesse entre au moins une roue de l'essieu (2) avant et au moins une roue de l'essieu (8) arrière, dans lequel, lors d'un actionnement du système (1) de freinage, et si une valeur de seuil de la différence de patinage ou une valeur de seuil de la différence de vitesse est dépassée par la différence de patinage ou par la différence de vitesse, on limite la pression de freinage sur l'essieu (8) arrière.

4. Produit de programme d'ordinateur ayant des parties de programme pour réaliser le procédé suivant l'une des revendications précédentes.

5. Système (1) de freinage actionné par fluide sous pression d'un véhicule ayant au moins un circuit de frein d'essieu avant associé à un essieu (2) avant et au moins un circuit de frein d'essieu arrière associé à un essieu (8) arrière, ainsi que
a) une régulation électronique de la répartition de la force de freinage, dans laquelle, lors d'un actionnement du système (1) de freinage, on régule une pression de freinage sur l'essieu arrière s'appliquant dans le au moins un circuit de frein d'essieu arrière, en vue d'empêcher un blocage des roues arrière avant un blocage des roues avant, dans lequel
b) dans un circuit de frein est prévu au moins un interrupteur (42) manométrique, qui, en fonction d'une valeur de pression s'appliquant au circuit de frein par rapport à une valeur de seuil de pression donnée à l'avance, produit un signal d'activation pour activer la régulation électronique de la répartition de la force de freinage, dans lequel
c) la régulation électronique est constituée de manière à ce qu'une limitation de la pression de freinage sur l'essieu (8) arrière n'ait lieu que tant que le signal d'activation est produit ou est présent, mais qu'une limitation de la pression de freinage sur l'essieu (8) arrière n'ait pas lieu, si un signal d'activation n'est pas produit ou n'est pas présent, **caractérisé en ce que**
d) le circuit de frein, dans lequel l'interrupteur (42) manométrique est prévu, est le circuit de frein de l'essieu arrière et **en ce que**
e) l'interrupteur (42) manométrique est constitué de manière à fournir le signal d'activation, si une valeur de pression, s'appliquant dans le circuit de frein de l'essieu arrière, devient inférieure à sa pression d'interruption et, sinon, il ne donne pas un tel signal d'activation.

6. Système de freinage actionné par fluide sous pression suivant la revendication 5, **caractérisé en ce qu'**il a au moins un interrupteur (26) lumineux de freinage et la régulation électronique de la répartition de la force de freinage est constituée de manière à détecter un actionnement de l'installation (1) de freinage au moyen d'un signal de l'interrupteur lumineux de freinage, la limitation de la pression de freinage sur l'essieu (8) arrière n'ayant lieu que si il y a un signal de l'interrupteur lumineux de freinage représentant un actionnement du système (1) de freinage, mais une limitation de la pression de freinage sur l'essieu (8) arrière n'a pas lieu, s'il n'y a pas de signal de l'interrupteur lumineux de freinage représentant un actionnement du système (1) de freinage.

7. Système de freinage actionné par fluide sous pression suivant la revendication 5 ou 6, **caractérisé en ce que** la régulation électronique de la répartition de la force de freinage est constituée de manière à réguler la répartition de la force de freinage en fonction d'une différence de patinage ou d'une différence de vitesse entre au moins une roue de l'essieu (2) avant et au moins une roue de l'essieu (8) arrière, dans lequel, lors d'un actionnement du système (1) de freinage et si une valeur de seuil de la différence de patinage ou une valeur de seuil de la différence de vitesse est dépassée par la différence de patinage ou par la différence de vitesse, la pression de freinage sur l'essieu (8) arrière est limitée.

8. Système de freinage actionné par fluide sous pression suivant la revendication 7, **caractérisé en ce qu'**il a au moins ce qui suit :
a) un capteur (18) de mesure des vitesses de rotation de la roue de l'essieu (2) avant,
b) un capteur (18) de mesure des vitesses de rotation de la roue de l'essieu (8) arrière,
c) un appareil (30) électronique de commande pour calculer une différence de patinage ou une différence de vitesse entre la au moins une roue de l'essieu (2) avant et la au moins une roue de l'essieu (8) arrière, dans lequel
d) l'appareil (30) électronique de commande est constitué de manière à limiter la pression de frein sur l'essieu (8) arrière, si une valeur de seuil de la différence de patinage ou une valeur de seuil de la différence de vitesse est dépassée par la différence de patinage ou par la différence de vitesse.

9. Système de freinage actionné par fluide sous pression suivant l'une des revendications 5 à 8, **caractérisé en ce que** l'appareil (30) électronique de commande est constitué, en outre, de manière à effectuer, en présence d'un glissement de freinage excessif, une régulation (ABS) de glissement de freinage, la limitation de la pression de freinage sur l'essieu (8) arrière s'effectuant au moyen d'une soupape (14) de commande de pression ABS montée dans le circuit de frein de l'essieu arrière.

10. Système de freinage actionné par fluide sous pression suivant l'une des revendications 5 à 8, **caractérisé en ce que** la valeur de seuil de pression de l'interrupteur manométrique est d'environ 3 bar.
